(19) Europäisches Patentamt
European Patent Office
Office européen des brevets

(11) Numéro de publication: **0 466 616 B1**

(12) **FASCICULE DE BREVET EUROPEEN**

(45) Date de publication du fascicule du brevet: **15.11.95**

(51) Int. Cl.[6]: **C08G 73/14**, C08G 18/34, C08G 18/08

(21) Numéro de dépôt: **91420228.8**

(22) Date de dépôt: **05.07.91**

(54) **Solutions de poly(imide-amide) limpides à température ambiante et stables au stockage et leur procédé d'obtention.**

(30) Priorité: **09.07.90 FR 9008914**

(43) Date de publication de la demande:
**15.01.92 Bulletin 92/03**

(45) Mention de la délivrance du brevet:
**15.11.95 Bulletin 95/46**

(84) Etats contractants désignés:
**BE CH DE DK ES FR GB IT LI NL SE**

(56) Documents cités:
**EP-A- 0 332 543**

**PATENT ABSTRACTS OF JAPAN, vol. 7, no. 273 (C-198)[1418], 6 décembre 1983; & JP-A-58 154 728**

(73) Titulaire: **CIBA-GEIGY AG**
**Klybeckstrasse 141**
**CH-4002 Basel (CH)**

(72) Inventeur: **Michaud, Philippe**
**100, rue Bugeaud**
**F-69006 Lyon (FR)**

EP 0 466 616 B1

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition (art. 99(1) Convention sur le brevet européen).

## Description

La présente invention concerne des solutions de poly(imide-amide) aromatiques linéaires qui d'une part sont limpides à température ambiante (23 ° C) et stables au stockage à la même température et d'autre part sont aptes à conduire notamment à des films ou des vernis possédant une coloration, quantifiée par la détermination de l'indice de luminance (on trouvera la définition de cet indice dans le paragraphe qui suit) d'un échantillon ayant une épaisseur de 10 à 100 $\mu$m et déposé sur un support en acier inoxydable, comprise entre 10 et 50. La présente invention concerne également un procédé pour l'obtention de solutions de poly(imide-amide) présentant les propriétés énoncées ci-avant.

Dans le système international trichromatique XYZ défini par la Commission Internationale de l'Eclairage en 1931, la composante Y ou indice de luminance traduit l'impression physiologique de luminosité (allant du foncé au clair) donné par un échantillon. Un indice de luminance de zéro correspond à la couleur noire et un indice de 100 correspond à la couleur blanche parfaite. Pratiquement, on détermine l'indice de luminance par une mesure de réflexion diffuse de l'échantillon, ayant une épaisseur de 10 à 100 $\mu$m et déposé sur un support en acier inoxydable, dans le domaine spectral du vert (longueur d'onde centrée à 550 nm) à l'aide d'un colorimètre à filtre de la marque ELREPHO ZEISS.

Il est déjà connu selon le FR-A-2.079.785 de préparer des solutions à base de poly(imide-amide) dans le N-méthylpyrrolidone, mais les solutions ainsi obtenues présentent une coloration intense brune qui se retrouve ultérieurement au niveau des articles mis en forme à partir de ces solutions et est de nature à limiter par voie de conséquence l'emploi de pareils articles. Dans le but de développer une coloration bien moindre, on a proposé dans le FR-A-2.627.497 :

- de réaliser la réaction de polycondensation conduisant au poly(imide-amide) au sein d'un solvant consistant dans la $\gamma$-butyrolactone ($\gamma$-BL) anhydre et exempte d'alcool butylique, utilisée en quantité telle que la concentration de polymère en fin de réaction de polycondensation (exprimée par le pourcentage en poids de polymère dans l'ensemble polymère + solvant) soit comprise entre 12 et 39 %,
- puis à opérer, à la fin de la réaction de polycondensation, une dilution à chaud de la solution réactionnelle, à une température comprise entre 120 ° C et 165 ° C, avec un solvant polaire aprotique anhydre comme la N-méthylpyrrolidone, le diméthylacétamide, le diméthylformamide ou la tétraméthylurée, ledit solvant de dilution étant utilisé en quantité telle que d'une part la concentration finale du poly(imide-amide) dans l'ensemble polymère + solvant de polycondensation + solvant de dilution soit comprise entre 5 et 30 % en poids et d'autre part le rapport pondéral solvant de polycondensation/solvant de dilution soit compris entre 40/60 et 80/20. A la lecture du contenu du FR-A-2.627.497 précité, et en particulier de l'exemple 5, il apparaît essentiel de conduire la réaction de polycondensation au sein de la $\gamma$-butyrolactone pour que la diminution de coloration souhaitée soit obtenue.

Toutefois la mise en oeuvre du procédé décrit dans le FR-A-2.627.497 précité présente un inconvénient qui réside dans la nécessité de devoir opérer une seconde étape de dilution à chaud faisant appel de plus à un second solvant qui ne peut pas être avantageusement le même que celui mis en oeuvre au niveau de la polycondensation, dans le but d'obtenir des solutions de poly(imide-amide) qui ne précipitent pas et demeurent limpides ou stables quand elles sont amenées et conservées à température ambiante (23 ° C) (cf. exemple 18). Une pareille seconde étape est une étape supplémentaire qui est de nature à augmenter de façon sensible le prix de revient de la solution souhaitée.

JP-A-58 154728 divulgue des solutions de poly (imide-amide) à base d'acides poly carboxyliques (par exemple l'anhydride d'acide trimellitique) et de polyisocyanates aromatiques (par exemple diisocyanato-4,4'-diphénylméthane et diisocyanato toluène).

Il existe donc un besoin de pouvoir disposer de solutions de poly(imide-amide) obtenues par une réaction de polycondensation dans la $\gamma$-butyrolactone qui ne précipitent pas à température ambiante (23 ° C) et demeurent limpides et stables au cours d'un stockage à la même température, mais qui ne font pas appel pour leur préparation à la mise en oeuvre d'une étape supplémentaire de dilution.

Poursuivant des travaux dans ce domaine de la technique, la Demanderesse a maintenant trouvé, et c'est ce qui constitue l'objet de la présente invention, des solutions de poly(imide-amide) qui répondent à la satisfaction de cet objectif. La présente invention consiste dans le choix, dans la famille des poly(imide-amide) conforme à l'art antérieur cité entrant dans la constitution des solutions, de certaines espèces consistant dans les polymères qui :

- d'une part sont préparés à partir d'un diisocyanate aromatique, d'un anhydride acide aromatique et éventuellement d'un diacide aromatique, en ayant soin d'engager comme diisocyanate un composé de structure bien déterminée,

- et d'autre part, présentent une masse moléculaire moyenne en nombre (Mn) parfaitement contrôlée par emploi en proportions bien déterminées, lors de la polycondensation, d'un agent limiteur de chaînes.

Plus spécifiquement, la présente invention concerne des solutions de poly(imide-amide) aromatiques linéaires qui d'une part sont limpides et stables au stockage à température ambiante (23 °C) et d'autre part sont aptes à conduire notamment à des films ou des vernis possédant une coloration, quantifiée par la détermination de l'indice de luminance par une mesure de réflexion diffuse d'un échantillon ayant une épaisseur de 10 à 100 µm et déposé sur un support en acier inoxydable, dans le domaine spectral du vert (longeur d'onde centrée à 550nm) à l'aide d'un colorimètre à filtre de la marque ELREPHO ZEISS comprise entre 10 et 50, caractérisées en ce qu'elles sont constituées :

a) de γ-butyrolactone comme solvant, prise à l'état anhydre et exempte d'alcool butylique, et

b) d'un poly(imide-amide), dont la concentration (exprimée en poids de polymère par rapport à l'ensemble polymère + solvant) est comprise entre 5 % et 40 %, qui répond essentiellement à la formule suivante :

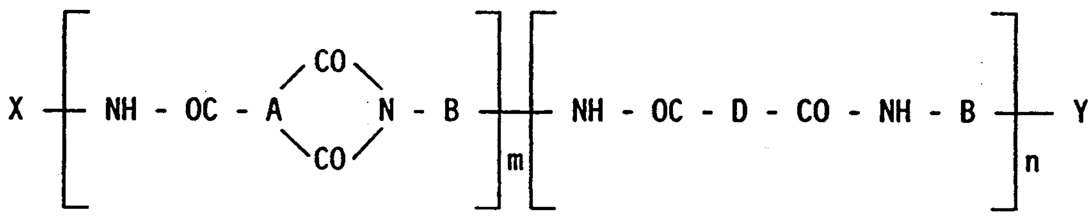

(I)

dans laquelle :

- les symboles A, identiques, représentent chacun un radical trivalent consistant dans un radical aromatique possédant 6 à 14 atomes de carbone, ou dans deux de ces radicaux reliés entre eux par un lien valentiel simple ou un groupement :

$$-CH_2-,\ -C(CH_3)_2-,\ -O-,\ -\underset{\underset{O}{\|}}{C}-\ ;$$

- les symboles B, identiques ou différents, représentent chacun un radical divalent choisi dans le groupe formé par les radicaux :

B1 = 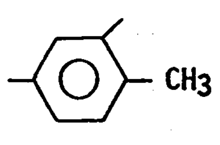 et B2 = 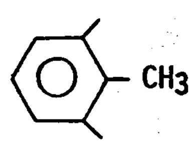

avec la possibilité selon laquelle, dans un même polymère de formule (I) :
* on peut avoir un mélange de radicaux B1 et B2, ou
* on peut remplacer jusqu'à 30 % du nombre total des radicaux B1 et/ou B2 par des radicaux :

B3 = 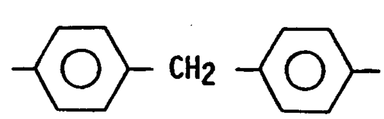 ;

- les symboles D, identiques, représentent chacun un radical aromatique divalent possédant 6 à 14 atomes de carbone;
- les symboles X et Y représentent :

* soit : l'alternative X1Y1 avec X1 = E - OC - NH - B - et
  Y1 = - NH - CO - E ,
  où E représente un radical aromatique monovalent possédant 6 à 14 atomes de carbone,
* soit : l'alternative X2Y2 avec

X2 = 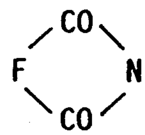 - B - et

Y2 = - 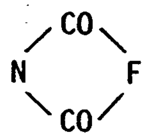 ,

où F représente un radical aromatique divalent possédant 6 à 14 atomes de carbone ;
- les symboles m (qui est un nombre positif) et n (qui est un nombre égal à zéro ou un nombre positif) représentent les nombres moyens des différents motifs de récurrence disposés statistiquement ; ces nombres étant liés entre eux par les relations suivantes :
  * la somme m + n se situe dans l'intervalle allant de 10 à 100, et
  * le rapport

$$r1 = \frac{n \times 100}{m}$$

se situe dans l'intervalle allant de 0 à 20.

L'invention concerne également un procédé pour l'obtention des solutions de poly(imide-amide) conformes aux définitions précédentes. Les solutions selon la présente invention sont préparées par chauffage, en opérant à une température allant de 160° à 200°C en présence comme solvant de $\gamma$-butyrolactone anhydre et exempte d'alcool butylique, des réactifs (i) à (4i) suivants, lesdits réactifs étant mis à réagir simultanément :
- (i) étant au moins un diisocyanate de formule :

O = C = N - B - N = C = O (II)

dans laquelle B a la signification B1 ou B2 donnée ci-avant à propos de la formule (I), avec la possibilité selon laquelle on peut engager :
  * un mélange d'un diisocyanate de formule (II) où B = B1 avec un diisocyanate de formule (II) où B = B2, ou
  * un mélange d'un diisocyanate de formule (II) où B = B1 et/ou d'un diisocyanate de formule (II) où B = B2 avec au plus 30 % en mole (par rapport au mélange total) d'un diisocyanate de formule (II) où B a la signification B3 donnée ci-avant à propos de la formule (I) ;
- (2i) étant un monoanhydride d'acide tricarboxylique de formule :

HOOC - 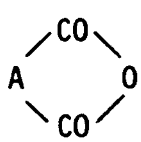 (III)

dans laquelle A a la signification donnée ci-avant à propos de la formule (I) ;
- (3i), facultatif, étant un diacide carboxylique de formule :

HOOC - D - COOH (IV)

dans laquelle D a la signification donnée ci-avant à propos de la formule (I) ;

- et (4i) étant un agent limiteur de chaînes consistant :
  * soit, dans le cas de l'alternative X1Y1 dont on a parlé ci-avant, dans un monoacide carboxylique de formule :

    E - COOH (V)

    dans laquelle E a la signification donnée ci-avant à propos de la formule (I),
  * soit, dans le cas de l'alternative X2Y2 dont on a parlé ci-avant, dans un monoanhydride d'acide dicarboxylique de formule :

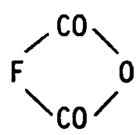

(VI)

    dans laquelle F a la signification donnée ci-avant à propos de la formule (I) ;
- les proportions respectives des réactifs (i) à (4i) étant choisies de façon que :
  * le rapport :

$$r2 = \frac{\text{nb. de moles de diisocyante(s) (i) x 2}}{\text{nb. de moles d'anhydride (2i) x 2 + évent. nb. de moles de diacide (3i) x 2 + nb. de moles de limiteur (4i)}}$$

    (avec nb. = nombre et évent. = éventuellement) soit égal à 1,
  * le rapport :

$$r3 = \frac{\text{nb. de moles de limiteur (4i) x 100}}{\text{nb. de moles d'anhydride (2i) + évent. nb. de moles de diacide (3i)}}$$

    se situe dans l'intervalle allant de 2 à 20,
  * le rapport :

$$r4 = \frac{\text{nb. de moles de diacide (3i) x 100}}{\text{nb. de moles d'anhydride (2i)}}$$

    se situe dans l'intervalle allant de 0 à 20 ;
- et la concentration du poly(imide-amide) obtenue en fin de polycondensation (exprimée en poids de polymère par rapport à l'ensemble polymère + solvant) se situant dans l'intervalle allant de 5 % à 40 %.

Le réactif diisocyanate (i) consiste dans : le diisocyanato-2,4 toluène ; le diisocyanato-2,6 toluène ; un mélange en proportions variables des deux toluylènes diisocyanates précités ; un mélange de l'un et/ou l'autre des deux toluylènes diisocyanates précités avec au plus 30 % en mole (par rapport au mélange total) de diisocyanato-4,4'-diphénylméthane. On utilise de préférence, pour la mise en oeuvre de la présente invention, le diisocyanato-2,4 toluène.

A titre d'exemples spécifiques de monoanhydrides d'acides tricarboxyliques (2i) de formule (III) qui conviennent bien, on peut citer en particulier :

- le monoanhydride d'acide trimellitique,
- le monoanhydride-2,3 d'acide naphtalène-tricarboxylique-2,3,6,
- le monoanhydride-1,8 d'acide naphtalène-tricarboxylique-1,8,4,

- le monoanhydride-1,2 d'acide naphtalène-tricarboxylique-1,2,5,
- le monoanhydride-3,4 d'acide diphényl-tricarboxylique-3,4,4′,
- le monoanhydride-3,4 d'acide diphényl-sulfone-tricarboxylique-3,4,3′,
- le monoanhydride-3,4 d'acide diphényl-éther-tricarboxylique-3,4,4′,
- le monoanhydride-3,4 d'acide benzophénone-tricarboxylique-3,4,4′,
- le monoanhydride-3,4 d'acide diphényl-isopropylidène-tricarboxylique-3,4,3′.

On utilise de préférence, pour la mise en oeuvre de la présente invention, le monoanhydride d'acide trimellique.

A titre d'exemples spécifiques de diacides aromatiques (3i) de formule (IV), qui sont utilisés de manière facultative, on peut citer en particulier les acides téréphtalique et isophtalique. On utilise de préférence l'acide téréphtalique.

A titre d'exemples spécifiques d'agents limiteurs de chaînes (4i) qui conviennent bien, on peut citer en particulier :

* dans le cas de l'alternative X1Y1, des monoacides aromatiques tels que les acides benzoïque, méthyl-2 benzoïque, méthyl-3 benzoïque et méthyl-4 benzoïque, ou
* dans le cas de l'alternative X2Y2, des monoanhydrides d'acides aromatiques tels que les anhydrides phtalique, méthyl-3 phtalique et méthyl-4 phtalique.

On utilise de préférence, pour la mise en oeuvre de la présente invention, l'acide benzoïque.

La réaction de polycondensation est effectuée comme indiqué ci-avant à une température allant de 160° à 200°C ; les meilleurs résultats sont obtenus à des températures allant de 170° à 190°C.

Pratiquement, on dissout les réactifs de départ, qui sont engagés ensemble, dans la γ-butyrolactone en opérant de préférence à température ambiante (20° à 30°C), puis on élève la température de la solution obtenue à la température de réaction désirée comprise entre 140° et 200°C et, de préférence, entre 170° et 190°C, soit directement, soit de manière progressive, en opérant sous la pression atmosphérique pendant une durée qui va varier dans une large mesure en fonction des conditions de température adoptées. Par exemple, lorsque l'on opère à une température de l'ordre de 180°C, la totalité des groupes fonctionnels du réactif diisocyanate (i) a réagi au bout de 3 à 4 heures.

A la fin de la réaction de polycondensation, la concentration du polymère est comprise entre 5 % et 40 %. De préférence, la quantité de γ-butyrolactone mise en oeuvre au départ est choisie de façon que cette concentration soit comprise entre 10 % et 30 %.

Les solutions selon l'invention peuvent être obtenues en discontinu ou en continu au moyen de tout appareil approprié. Ces solutions se prêtent bien à la fabrication notamment de films de revêtement, de vernis isolants, de matières adhésives et cela soit, lors de l'évaporation du solvant, soit ultérieurement.

En utilisant, à la place du réactif diisocyanate (i) particulier conforme à la présente invention, le réactif diisocyanate couramment utilisé dans le FR-A-2.627.497 consistant dans le diisocyanato-4,4′-diphénylméthane, on observe que le poly(imide-amide) correspondant précipite à température ambiante de sorte que la "solution" obtenue n'est ni stockable, ni utilisable.

Ce phénomène de précipitation est observé aussi bien en absence qu'en présence, dans le milieu de polycondensation, d'un agent limiteur de chaînes. Il est possible d'obtenir une solution limpide à condition d'effectuer, conformément à l'enseignement du FR-A-2.627.497, une étape supplémentaire de dilution à chaud du milieu de polycondensation à l'aide d'un solvant polaire aprotique comme la N-métylpyrrolidone.

Par rapport à la technique antérieurement décrite, les solutions selon la présente invention offrent deux avantages : d'une part elles sont obtenues plus simplement sans faire appel à une étape supplémentaire de dilution à chaud ; et d'autre part, elles conduisent à des articles possédant une coloration qui est diminuée. Par exemple, dans le cas de films présentant une épaisseur de 50 µm déposés sur une plaque en acier inoxydable, on obtient un indice de luminance compris entre 10 et 20 ; avec la technique antérieure, cet indice se situe entre 2 et 5.

L'exemple qui suit est donné à titre illustratif mais non limitatif.

EXEMPLE :

Dans un réacteur en verre de 500 $cm^3$ muni d'un agitateur central de type ancre et d'un réfrigérant ascendant, dans lequel on établit une légère surpression d'azote sec, on introduit à température ambiante (23°C) successivement :

- 60,9 g (0,35 mole) de diisocyanato-2,4-toluène (i),
- 64 g (0,334 mole) de monoanhydride d'acide trimellitique (2i),
- 3,90 g (0,032 mole) d'acide benzoïque (4i), et
- 300 g de γ-butyrolactone distillée.

Nous avons les relations suivantes : r2 = 1 ; r3 = 9,58 ; et r4 = 0.

Le mélange réactionnel est agité pendant 5 minutes à température ambiante (23 °C), puis il est chauffé à 180 °C.

La montée en température s'effectue en 1 heure. Une fois cette température atteinte, on laisse la réaction se poursuivre pendant 3 heures à 180 °C. Au bout de ce temps, la masse réactionnelle est refroidie à température ambiante (23 °C). Le collodion ou solution du poly(imide-amide) ainsi obtenu est une masse liquide de couleur brune ayant un poids de 397 g (contenant 97,9 g de polymère).

Par analyse infra-rouge, on note la présence dans le collodion de bandes C = 0 imide à $\nu$ = 1710 -1770 $cm^{-1}$ et l'absence de bande C = 0 anhydride à $\nu$ = 1850 $cm^{-1}$ et isocyanate à $\nu$ = 2270 $cm^{-1}$.

Le poly(imide-amide) qui est contenu dans la solution répond essentiellement à la formule suivante :

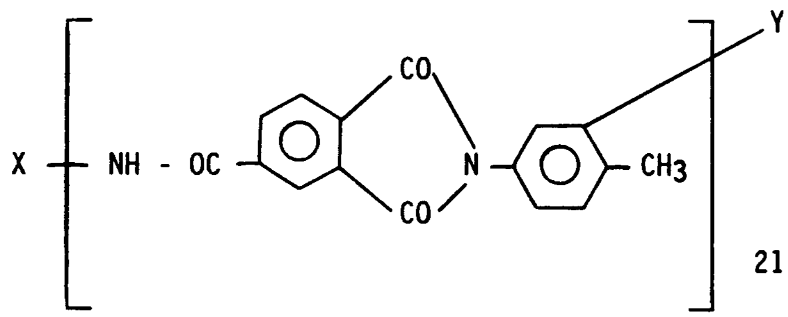

avec

X = 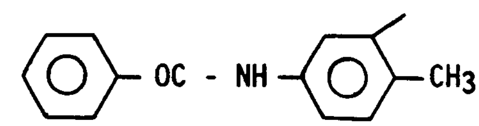 et

Y = 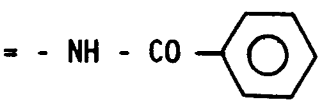 .

Le collodion est coulé sur une plaque en acier inoxydable, préalablement dégraissée au trichloréthylène, à l'aide d'une couleuse (épaisseur = 100 µm). Le solvant est ensuite évaporé en étuve selon la protocole suivant :

- 30 minutes à 190 °C, puis montée à 200 °C en 50 minutes,
- 30 minutes à 200 °C, puis montée à 250 °C en 50 minutes, et
- 1 heure à 250 °C, puis refroidissement à raison de 5 °C par minute.

Le vernis obtenu après ce traitement a une épaisseur de 50 µm ; il adhère fortement au support et présente un coloris jaune citron. Son indice de luminance est de 11,3.

ESSAI COMPARATIF 1 :

Dans le réacteur de l'exemple 1, on introduit successivement à température ambiante (23 °C) :

- 72,5 g (0,29 mole) de diisocyanato-4,4'-diphénylméthane,
- 53 g (0,276 mole) de monoanhydride d'acide trimellitique,
- 3,42 g (0,028 mole) d'acide benzoïque, et
- 300 g de $\gamma$-butyrolactone distillée.

Nous avons les relations suivantes : r2 = 1 ; r3 = 10,1 ; et r4 = 0.

Le mélange réactionnel est agité pendant 5 minutes à température ambiante (23 °C), puis il est chauffé à 180 °C.

La montée en température s'effectue en 1 heure. Une fois cette température atteinte, on laisse la réaction se poursuivre à 180 °C. Après 2 heures à cette température, le polymère précipite dans le milieu réactionnel.

ESSAI COMPARATIF 2 :

Dans le réacteur de l'exemple 1, on introduit successivement à température ambiante (23 °C) :

- 72,5 g (0,29 mole) de diisocyanato-4,4'-diphényl-méthane,
- 55,7 g (0,29 mole) de monoanhydride d'acide trimellitique, et
- 300 g de γ-butyrolactone.

Le mélange réactionnel est agité pendant 5 minutes à température ambiante (23 °C), puis il est chauffé à 180 °C. La montée en température s'effectue en 1 heure. Une fois cette température atteinte, on laisse la réaction se poursuivre à 180 °C pendant 2 heures. Au bout de ce temps, on ajoute 150 g de N-méthylpyrrolidone et on refroidit.

Le collodion est coulé sur une plaque en acier inoxydable, préalablement dégraissée au trichloréthylène, à l'aide d'une couleuse (épaisseur 250 µm). Le solvant est ensuite évaporé selon le protocole décrit à l'exemple 1. Le vernis obtenu après ce traitement a une épaisseur de 50 µm ; il présente un coloris marron foncé et un indice de luminance de 3,9.

## Revendications

**1.** Solutions de poly(imide-amide) aromatiques linéaires qui d'une part sont limpides et stables au stockage à température ambiante (23 °C) et d'autre part sont aptes à conduire notamment à des films ou des vernis possédant une coloration, quantifiée par la détermination de l'indice de luminance par une mesure de réflexion diffuse d'un échantillon ayant une épaisseur de 10 à 100 µm et déposé sur un support en acier inoxydable, dans le domaine spectral du vert (longeur d'onde centrée à 550nm) à l'aide d'un colorimètre à filtre de la marque ELREPHO ZEISS comprise entre 10 et 50, caractérisées en ce qu'elles sont constituées :

a) de γ-butyrolactone comme solvant, prise à l'état anhydre et exempte d'alcool butylique, et

b) d'un poly(imide-amide), dont la concentration (exprimée en poids de polymère par rapport à l'ensemble polymère + solvant) est comprise entre 5 % et 40 %, qui répond essentiellement à la formule suivante :

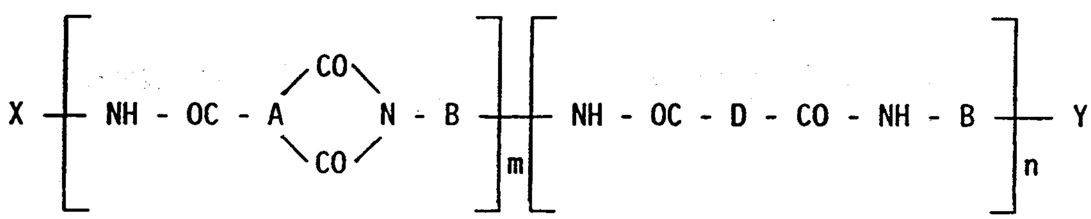

(I)

dans laquelle :

- les symboles A, identiques, représentent chacun un radical trivalent consistant dans un radical aromatique possédant 6 à 14 atomes de carbone, ou dans deux de ces radicaux reliés entre eux par un lien valentiel simple ou un groupement :

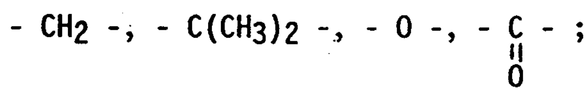

- les symboles B, identiques ou différents, représentent chacun un radical divalent choisi dans le groupe formé par les radicaux :

B1 = 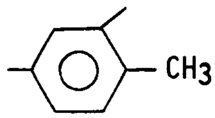 et B2 = 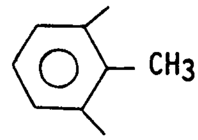

avec la possibilité selon laquelle, dans un même polymère de formule (I) :

* on peut avoir un mélange de radicaux B1 et B2, ou
* on peut remplacer jusqu'à 30 % du nombre total des radicaux B1 et/ou B2 par des radicaux :

B3 = 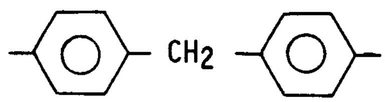 ;

- les symboles D, identiques, représentent chacun un radical aromatique divalent possédant 6 à 14 atomes de carbone;
- les symboles X et Y représentent :
  * soit : l'alternative X1Y1 avec X1 = E - OC - NH - B - et
    Y1 = - NH - CO - E ,
    où E représente un radical aromatique monovalent possédant 6 à 14 atomes de carbone,
  * soit : l'alternative X2Y2 avec

X2 = 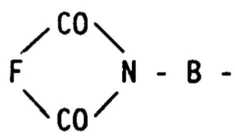 et

Y2 = 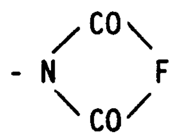 ,

où F représente un radical aromatique divalent possédant 6 à 14 atomes de carbone ;

- les symboles m (qui est un nombre positif) et n (qui est un nombre égal à zéro ou un nombre positif) représentent les nombres moyens des différents motifs de récurrence disposés statistiquement ; ces nombres étant liés entre eux par les relations suivantes :
  * la somme m + n se situe dans l'intervalle allant de 10 à 100, et
  * le rapport

$$r1 = \frac{n \times 100}{m}$$

se situe dans l'intervalle allant de 0 à 20.

**2.** Procédé de préparation des solutions de poly(imide-amide) selon la revendication 1, caractérisé en ce qu'il consiste à effectuer le chauffage, en opérant à une température allant de 160° à 200°C en présence comme solvant de γ-butyrolactone anhydre et exempte d'alcool butylique, des réactifs (i) à (4i) suivants, lesdits réactifs étant mis à réagir simultanément :

- (i) étant au moins un diisocyanate de formule :

O = C = N - B - N = C = O (II)

dans laquelle B a la signification B1 ou B2 donnée ci-avant à propos de la formule (I), avec la possibilité selon laquelle on peut engager :

* un mélange d'un diisocyanate de formule (II) où B = B1 avec un diisocyanate de formule (II) où B = B2, ou
* un mélange d'un diisocyanate de formule (II) où B = B1 et/ou d'un diisocyanate de formule (II) où B = B2 avec au plus 30 % en mole (par rapport au mélange total) d'un diisocyanate de formule (II) où B a la signification B3 donnée ci-avant à propos de la formule (I) ;

- (2i) étant un monoanhydride d'acide tricarboxylique de formule

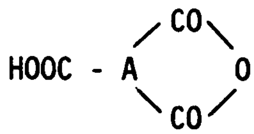

(III)

dans laquelle A a la signification donnée ci-avant à propos de la formule (I) ;

- (3i), facultatif, étant un diacide carboxylique de formule :

HOOC - D - COOH (IV)

dans laquelle D a la signification donnée ci-avant à propos de la formule (I) ;

- et (4i) étant un agent limiteur de chaînes consistant :
  * soit, dans le cas de l'alternative X1Y1 dont on a parlé ci-avant, dans un monoacide carboxylique de formule :

    E - COOH (V)

    dans laquelle E a la signification donnée ci-avant à propos de la formule (I),
  * soit, dans le cas de l'alternative X2Y2 dont on a parlé ci-avant, dans un monoanhydride d'acide dicarboxylique de formule :

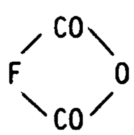

(VI)

dans laquelle F a la signification donnée ci-avant à propos de la formule (I) ;

- les proportions respectives des réactifs (i) à (4i) étant choisies de façon que :
  * le rapport :

$$r2 = \frac{\text{nb. de moles de diisocyante(s) (i)} \times 2}{\text{nb. de moles d'anhydride (2i)} \times 2 + \text{évent. nb. de moles de diacide (3i)} \times 2 + \text{nb. de moles de limiteur (4i)}}$$

(avec nb. = nombre et évent. = éventuellement) soit égal à 1,

  * le rapport :

$$r3 = \frac{\text{nb. de moles de limiteur (4i)} \times 100}{\text{nb. de moles d'anhydride (2i)} + \text{évent. nb. de moles de diacide (3i)}}$$

se situe dans l'intervalle allant de 2 à 20,

* le rapport :

$$r4 = \frac{\text{nb. de moles de diacide (3i) x 100}}{\text{nb. de moles d'anhydride (2i)}}$$

se situe dans l'intervalle allant de 0 à 20 ;
- et la concentration du poly(imide-amide) obtenue en fin de polycondensation (exprimée en poids de polymère par rapport à l'ensemble polymère + solvant) se situant dans l'intervalle allant de 5 % à 40 %.

3. Procédé selon la revendication 2, caractérisé en ce que le réactif diisocyanate (i) est pris dans le groupe formé par : le diisocyanato-2,4 toluène ; le diisocyanato-2,6 toluène ; un mélange en proportions variables des deux toluylènes diisocyanates précités ; un mélange de l'un et/ou l'autre des deux toluylènes diisocyanates précités avec au plus 30 % en mole (par rapport au mélange total) de diisocyanato-4,4'-diphénylméthane.

4. Procédé selon l'une quelconque des revendications 2 et 3, caractérisé en ce que le monoanhydride d'acide tricarboxylique (2i) de formule (III) est pris dans le groupe formé par :
   - le monoanhydride d'acide trimellitique,
   - le monoanhydride-2,3 d'acide naphtalène-tricarboxylique-2,3,6,
   - le monoanhydride-1,8 d'acide naphtalène-tricarboxylique-1,8,4,
   - le monoanhydride-1,2 d'acide naphtalène-tricarboxylique-1,2,5,
   - le monoanhydride-3,4 d'acide diphényl-tricarboxylique-3,4,4',
   - le monoanhydride-3,4 d'acide diphényl-sulfone-tricarboxylique-3,4,3',
   - le monoanhydride-3,4 d'acide diphényl-éther-tricarboxylique-3,4,4',
   - le monoanhydride-3,4 d'acide benzophénone-tricarboxylique-3,4,4',
   - le monoanhydride-3,4 d'acide diphényl-isopropylidène-tricarboxylique-3,4,3'.

5. Procédé selon l'une quelconque des revendications 2 à 4, caractérisé en ce que le diacide carboxylique facultatif (3i) de formule (IV) est l'acide téréphtalique ou l'acide isophtalique.

6. Procédé selon l'une quelconque des revendications 2 à 5, caractérisé en ce que l'agent limiteur de chaînes (4i) est :
   - dans le cas de l'alternative X1Y1 : l'acide benzoïque, l'acide méthyl-2 benzoïque, l'acide méthyl-3 benzoïque ou l'acide méthyl-4 benzoïque ;
   - dans le cas de l'alternative X2Y2 : l'anhdydride phtalique, l'anhydride méthyl-3 phtalique ou l'anhydride méthyl-4 phtalique.

7. Procédé selon l'une quelconque des revendications 2 à 6, caractérisé en ce que l'on dissout les réactifs de départ, qui sont engagés ensemble, dans la γ-butyrolactone en opérant à température ambiante (20° à 30°C), puis on élève la température de la solution obtenue à la température de réaction désirée comprise entre 140° et 200°C, soit directement, soit de manière progressive, en opérant sous la pression atmosphérique pendant une durée qui va varier dans une large mesure en fonction des conditions de température adoptées.

8. Procédé selon l'une quelconque des revendications 2 à 7, caractérisé en ce que la quantité du solvant γ-butyrolactone mise en oeuvre au départ est choisie de façon que la concentration du poly(imide-amide) obtenue en fin de polycondensation soit comprise entre 10 % et 30 %.

9. Utilisation des solutions de poly(imide-amide) selon la revendication 1 pour la fabrication de films de revêtement, de vernis isolants, de matières adhésives et cela, soit lors de l'évaporation du solvant, soit ultérieurement.

## Claims

**1.** Solutions of linear aromatic poly(imideamide) which, on the one hand, are clear and stable in storage at room temperature (23 °C) and, on the other hand, are capable of producing especially films or varnishes which have a colour, quantified by the determination of the luminance value by a measurement of scattered reflection of a sample which has a thickness of 10 to 100 µm and is deposited on a stainless steel substrate, in the green region of the spectrum (wavelength centred at 550 nm) with the aid of a filter colorimeter of the Zeiss Elrepho trademark, of between 10 and 50, which are characterized in that they consist:

a) of γ-butyrolactone as solvent, taken in the anhydrous state and free from butyl alcohol and

b) of a poly(imideamide) whose concentration (expressed as weight of polymer relative to the total of polymer + solvent) is between 5 % and 40 %, which corresponds essentially to the following formula:

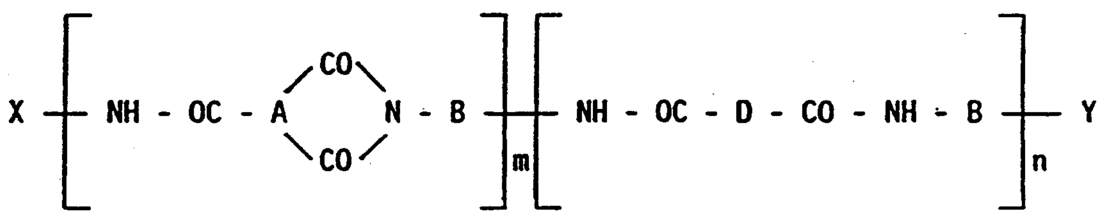

(I)

in which:

- each of the symbols A, which are identical, denotes a trivalent radical consisting of an aromatic radical containing 6 to 14 carbon atoms, or of two of these radicals linked together by a single valency bond or a group:

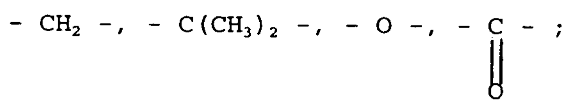

- each of the symbols B, which are identical or different, denotes a divalent radical chosen from the group made up of the radicals:

B1 = 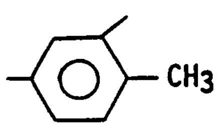 and B2 = 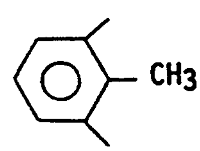

with the possibility according to which, in the same polymer of formula (I):
- there may be a mixture of radicals B1 and B2, or
- up to 30 % of the total number of the radicals B1 and/or B2 may be replaced by radicals:

B3 = 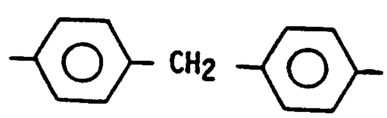 ;

- each of the symbols D, which are identical, denotes a divalent aromatic radical containing 6 to 14 carbon atoms;
- the symbols X and Y denote:
  - either: the alternative X1Y1 with
    X1 = E - OC - NH - B - and
    Y1 = - NH - CO - E,

where E denotes a monovalent aromatic radical containing 6 to 14 carbon atoms,

- or: the alternative X2Y2 with

X2 = 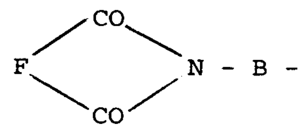 and

Y2 = 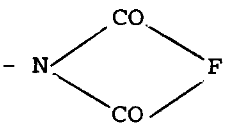 ,

where F denotes a divalent aromatic radical containing 6 to 14 carbon atoms;

- the symbols m (which is a positive number) and n (which is a number equal to zero or a positive number) denote the average numbers of the various repeat units which are arranged statistically; these numbers being linked together by the following relationships:
  - the sum m + n lies in the range from 10 to 100, and
  - the ratio r1 = (n × 100)/m lies in the range from 0 to 20.

**2.** Process for the preparation of the poly(imideamide) solutions according to claim 1, characterized in that it consists in performing the heating of the following reactants (i) to (iv), the said reactants being reacted simultaneously, the operation being carried out at a temperature ranging from 160° to 200°C in the presence of anhydrous and butyl alcohol-free $\gamma$-butyrolactone as solvent:

- (i) being at least one diisocyanate of formula:

  O = C = N - B - N = C = O (II)

  in which B has the meaning B1 or B2 given above in connection with the formula (I), with the possibility according to which it is possible to use:
  - a mixture of a diisocyanate of formula (II) where B = B1 with a diisocyanate of formula (II) where B = B2, or
  - a mixture of a diisocyanate of formula (II) where B = B1 and/or of a diisocyanate of formula (II) where B = B2 with not more than 30 mol% (relative to the total mixture) of a diisocyanate of formula (II) where B has the meaning B3 given above in connection with the formula (I);
- (ii) being a tricarboxylic acid monoanhydride of formula:

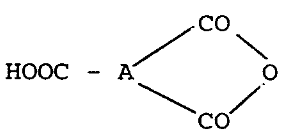 (III)

  in which A has the meaning given above in connection with the formula (I);
- (iii), which is optional, being a dicarboxylic acid of formula:

  HOOC - D - COOH (IV)

  in which D has the meaning given above in connection with the formula (I);
- and (iv) being a chain limiting agent consisting:
  - either, in the case of the alternative X1Y1 discussed above, of a monocarboxylic acid of formula:

    E - COOH (V)

    in which E has the meaning given above in connection with the formula (I),
  - or, in the case of the alternative X2Y2 discussed above, of a dicarboxylic acid monoanhydride of formula:

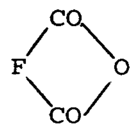

(VI)

in which F has the meaning given above in connection with the formula (I);

- the corresponding proportions of the reactants (i) to (iv) being chosen so that:
  - the ratio:

$$r2 = \frac{\text{no. of moles of diisocyanate(s) (i)} \times 2}{\text{no. of moles of anhydride (ii)} \times 2 + \text{opt. no. of moles of diacid (iii)} \times 2 + \text{no. of moles of limiter (iv)}}$$

(with no. = number and opt. = optionally) is equal to 1,

  - the ratio:

$$r3 = \frac{\text{no. of moles of limiter (iv)} \times 100}{\text{no. of moles of anhydride (ii)} + \text{opt. no. of moles of diacid (iii)}}$$

lies in the range from 2 to 20,

  - the ratio:

$$r4 = \frac{\text{no. of moles of diacid (iii)} \times 100}{\text{no. of moles of anhydride (ii)}}$$

lies in the range from 0 to 20;

- and the poly(imideamide) concentration obtained at the end of the polycondensation (expressed as weight of polymer relative to the total of polymer + solvent) lying in the range from 5 % to 40 %.

**3.** Process according to claim 2, characterized in that the diisocyanate reactant (i) is taken from the group made up of: 2,4-diisocyanatotoluene, 2,6-diisocyanatotoluene, a mixture of variable proportions of the abovementioned two tolylene diisocyanates, and a mixture of either or both of the abovementioned two tolylene diisocyanates with not more than 30 mol% (relative to the total mixture) of 4,4'-diisocyanatodiphenylmethane.

**4.** Process according to either of claims 2 and 3, characterized in that the tricarboxylic acid monoanhydride (ii) of formula (III) is taken from the group made up of:

- trimellitic acid monoanhydride,
- 2,3,6-naphthalenetricarboxylic acid 2,3-monoanhydride,
- 1,8,4-naphthalenetricarboxylic acid 1,8-monoanhydride,
- 1,2,5-naphthalenetricarboxylic acid 1,2-monoanhydride,
- 3,4,4'-diphenyltricarboxylic acid 3,4-monoanhydride,
- 3,4,3'-diphenyl sulphone tricarboxylic acid 3,4-monoanhydride,
- 3,4,4'-diphenyl ether tricarboxylic acid 3,4-monoanhydride,
- 3,4,4'-benzophenonetricarboxylic acid 3,4-monoanhydride, and
- 3,4,3'-diphenylisopropylidenetricarboxylic acid 3,4-monoanhydride.

**5.** Process according to any one of claims 2 to 4, characterized in that the optional dicarboxylic acid (iii) of formula (IV) is terephthalic acid or isophthalic acid.

**6.** Process according to any one of claims 2 to 5, characterized in that the chain limiting agent (iv) is:
- in the case of the alternative X1Y1: benzoic acid, 2-methylbenzoic acid, 3-methylbenzoic acid or 4-methylbenzoic acid;
- in the case of the alternative X2Y2: phthalic anhydride, 3-methylphthalic anhydride or 4-methylphthalic anhydride.

**7.** Process according to any one of claims 2 to 6, characterized in that the starting reactants, which are introduced together, are dissolved in γ-butyrolactone, the operation being carried out at room temperature (20° to 30°C), and the temperature of the solution obtained is then raised to the desired reaction temperature of between 140° and 200°C either directly or progressively, the operation being carried out at atmospheric pressure for a period which will vary to a large extent as a function of the temperature conditions which are adopted.

**8.** Process according to any one of claims 2 to 7, characterized in that the quantity of the γ-butyrolactone solvent used at the beginning is chosen so that the concentration of the poly(imideamide) obtained at the end of polycondensation is between 10 % and 30 %.

**9.** Use of the poly(imideamide) solutions according to claim 1 for the manufacture of coating films, insulating varnishes, adhesive substances, this being either when the solvent evaporates or subsequently.

**Patentansprüche**

**1.** Lösungen von linearen aromatischen Poly(imid-amiden), die einerseits bei Umgebungstemperatur (23 °C ) klar und lagerstabil und andererseits fähig sind, insbesondere Filme oder Lacke mit einer Färbung zu ergeben, quantifiziert durch die Bestimmung des Luminanz-Index mittels Messung der diffusen Reflexion an einer Probe mit einer Dicke von 10 bis 100 µm, die auf einem Träger aus rostfreiem Stahl angeordnet ist, im grünen Spektral-Bereich (zentrale Wellenlänge 550 nm) mit Hilfe eines Filter-Kolorimeters der Marke ELREPHO ZEISS), zwischen 10 und 50, dadurch gekennzeichnet, daß sie bestehen aus:

a) γ-Butyrolacton als Lösungsmittel, im wasserfreien Zustand und befreit von Butylalkohol, und

b) einem Poly(imid-amid), dessen Konzentration (ausgedrückt in Gewicht Polymer, bezogen auf die Gesamtheit Polymer + Lösungsmittel) zwischen 5 % und 40 % liegt und das im wesentlichen der folgenden Formel (I) entspricht:

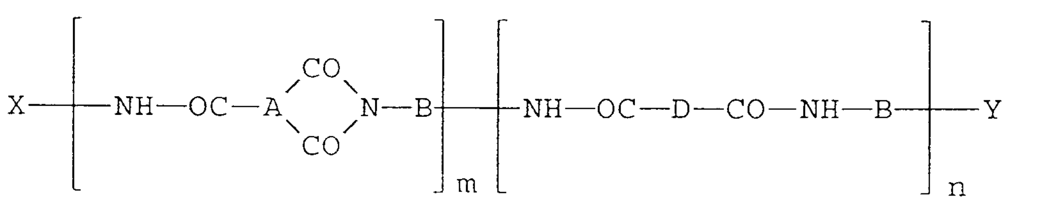

(I)

in der
- die Symbole A, identisch, jeweils einen trivalenten Rest darstellen, bestehend aus einem aromatischen Rest mit 6 bis 14 Kohlenstoffatomen oder aus zwei von diesen Resten, die untereinander durch eine einfache Valenzbindung oder eine Gruppe

  $-CH_2-$ , $-C(CH_3)_2$ , -O- , -CO- ;

  verbunden sind;
- die Symbole B, identisch oder verschieden, jeweils einen divalenten Rest darstellen, gewählt aus der durch die folgenden Reste gebildeten Gruppe:

B1 = 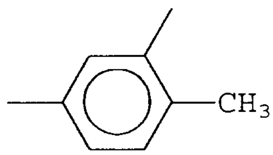 und B2 = 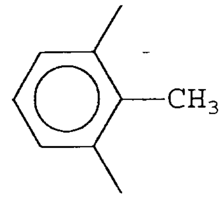

mit der Möglichkeit, daß man in einem gleichen Polymer der Formel (I):

* eine Mischung der Reste B1 und B2 haben kann, oder
* bis zu 30 % der Gesamtanzahl der Reste B1 und/oder B2 durch Reste

B3 = 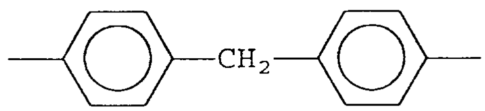

ersetzen kann;

- die Symbole D, identisch, jeweils einen divalenten aromatischen Rest mit 6 bis 14 Kohlenstoffatomen darstellen;
- die Symbole X und Y darstellen:
  * entweder die Alternative X1Y1 mit
    X1 = E - OC - NH - B - und
    Y1 = - NH - CO - E, worin E einen monovalenten aromatischen Rest mit 6 bis 14 Kohlenstoffatomen bedeutet,
  * oder die Alternative X2Y2 mit

X2 = 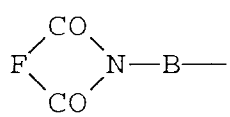 und Y2 = 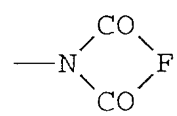

worin F einen divalenten aromatischen Rest mit 6 bis 14 Kohlenstoffatomen bedeutet;

- die Symbole m (das eine positive Zahl ist) und n (das gleich null oder eine positive Zahl ist) mittlere Zahlen verschiedener statistisch angeordneter, wiederkehrender Einheiten darstellen, wobei diese Zahlen untereinander durch die folgenden Beziehungen verbunden sind:
  * die Summe m + n liegt im Intervall von 10 bis 100, und
  * das Verhältnis

$$r1 = \frac{n \times 100}{m}$$

liegt im Intervall von 0 bis 20.

**2.** Verfahren zur Herstellung der Poly(imid-amid)-Lösungen nach Anspruch 1, dadurch gekennzeichnet, daß es darin besteht, eine Erhitzung der folgenden Reaktanden (i) bis (4i) durchzuführen, wobei man bei einer Temperatur von 160 °C bis 200 °C in Anwesenheit von γ-Butyrolacton als Lösungsmittel arbeitet, im wasserfreien Zustand und befreit von Butylalkohol, und die Reaktanden gleichzeitig zur Reaktion gebracht werden, und zwar

- (i) mindestens ein Diisocyanat der Formel (II)

O = C = N - B - N = C = O (II)

worin B die vorstehend bei der Formel (I) angegebene Bedeutung von B1 oder B2 besitzt, mit der Möglichkeit, daß man einsetzen kann

* eine Mischung eines Diisocyanates der Formel (II), worin B = B1 ist, mit einem Diisocyanat der Formel (II), worin B = B2 ist, oder
* eine Mischung eines Diisocyanates der Formel (II), worin B = B1 ist und/oder eines Diisocyanates der Formel (II), worin B = B2 ist, mit höchstens 30 Mol-% (bezogen auf die Gesamtmischung) eines Diisocyanates der Formel (II), worin B die vorstehend bei der Formel (I) angegebene Bedeutung von B3 besitzt;

- (2i) ein Tricarbonsäure-monoanhydrid der Formel (III)

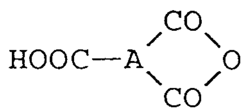

(III)

in der A die vorstehend bei der Formel (I) angegebene Bedeutung besitzt;

- (3i), fakultativ, eine Dicarbonsäure der Formel (IV)

HOOC - D - COOH (IV)

in der D die vorstehend bei der Formel (I) angegebene Bedeutung besitzt; und

- (4i) ein Mittel zur Kettenbegrenzung, bestehend
  * entweder, im Fall der obengenannten Alternative X1Y1 aus einer Monocarbonsäure der Formel (V)

    E - COOH (V)

    in der E die vorstehend bei der Formel (I) angegebene Bedeutung besitzt;
  * oder im Fall der obengenannten Alternative X2Y2 aus einem Dicarbonsäure-monoanhydrid der Formel (VI)

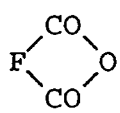

(VI)

in der F die vorstehend bei der Formel (I) angegebene Bedeutung besitzt;

- wobei die jeweiligen Anteile der Reaktanden (i) bis (4i) in der Weise ausgewählt werden, daß
  * das Verhältnis

$$r2 = \frac{\text{Anzahl Mole Diisocyanat(e) (i)} \times 2}{\text{Anz. Mole Anhydrid (2i)} \times 2 + \text{ggfl. Anz. Mole Disäure (3i)} \times 2 + \text{Anz. Mole Begrenzer (4i)}}$$

gleich 1 ist,

  * das Verhältnis

$$r3 = \frac{\text{Anzahl Mole Begrenzer (4i)} \times 100}{\text{Anz. Mole Anhydrid (2i)} + \text{ggfl. Anz. Mole Disäure (3i)}}$$

im Intervall von 2 bis 20 liegt,

* das Verhältnis

$$r4 = \frac{\text{Anzahl Mole Disäure (3i) x 100}}{\text{Anz. Mole Anhydrid (2i)}}$$

im Intervall von 0 bis 20 liegt;

- und die Konzentration des am Ende der Polykondensation erhaltenen Poly(imid-amids) (ausgedrückt in Gewicht Polymer, bezogen auf die Gesamtheit Polymer + Lösungsmittel) im Intervall von 5 % bis 40 % liegt.

**3.** Verfahren nach Anspruch 2, dadurch gekennzeichnet, daß der Reaktand Diisocyanat (i) aus der Gruppe gewählt wird, die gebildet wird von: 2,4-Diisocyanato-toluol; 2,6-Diisocyanato-toluol; einer Mischung der zwei vorstehend genannten Diisocyanato-toluole in variablen Verhältnissen; einer Mischung von dem einem und/oder dem anderen der zwei vorstehend genannten Diisocyanato-toluole mit höchstens 30 Mol-% (bezogen auf die Gesamtmischung) 4,4'-Diisocyanato-diphenylmethan.

**4.** Verfahren nach irgendeinem der Ansprüche 2 und 3, dadurch gekennzeichnet, daß das Tricarbonsäure-monoanhydrid (2i) der Formel (III) aus der Gruppe gewählt wird, die gebildet wird von:

- Trimellitsäure-monoanhydrid,
- 2,3,6-Naphthalin-tricarbonsäure-2,3-monoanhydrid,
- 1,8,4-Naphthalin-tricarbonsäure-1,8-monoanhydrid,
- 1,2,5-Naphthalin-tricarbonsäure-1,2-monoanhydrid,
- 3,4,4'-Diphenyl-tricarbonsäure-3,4-monoanhydrid,
- 3,4,3'-Diphenylsulfon-tricarbonsäure-3,4-monoanhydrid,
- 3,4,4'-Diphenylether-tricarbonsäure-3,4-monoanhydrid,
- 3,4,4'-Benzophenon-tricarbonsäure-3,4-monoanhydrid,
- 3,4,3'-Diphenylisopropyliden-tricarbonsäure-3,4-monoanhydrid.

**5.** Verfahren nach irgendeinem der Ansprüche 2 bis 4, dadurch gekennzeichnet, daß die fakultative Dicarbonsäure (3i) der Formel (IV) Terephthalsäure oder Isophthalsäure ist.

**6.** Verfahren nach irgendeinem der Ansprüche 2 bis 5, dadurch gekennzeichnet, daß das Mittel zur Kettenbegrenzung (4i) ist:

- in dem Fall der Alternative X1Y1: Benzoesäure, 2-Methyl-benzoesäure, 3-Methyl-benzoesäure oder 4-Methyl-benzoesäure;
- in dem Fall der Alternative X2Y2: Phthalsäureanhydrid, 3-Methyl-phthalsäureanhydrid oder 4-Methyl-phthalsäureanhydrid.

**7.** Verfahren nach irgendeinem der Ansprüche 2 bis 6, dadurch gekennzeichnet, daß man die Ausgangs-Reaktanden, die zusammen eingesetzt werden, in $\gamma$-Butyrolacton löst, wobei man bei Umgebungstemperatur (20 °C bis 30 °C) arbeitet, und man anschließend die Temperatur der erhaltenen Lösung entweder direkt oder nacheinander auf die gewünschte Reaktionstemperatur zwischen 140 °C und 200 °C erhöht, wobei man unter atmosphärischem Druck während einer Zeitdauer arbeitet, die in weitem Maße in Abhängigkeit von den angepaßten Temperaturbedingungen variieren kann.

**8.** Verfahren nach irgendeinem der Ansprüche 2 bis 7, dadurch gekennzeichnet, daß die Menge des eingesetzten Ausgangs-Lösungsmittels $\gamma$-Butyrolacton in der Weise gewählt wird, daß die Konzentration des am Ende der Polykondensation erhaltenen Poly(imid-amids) zwischen 10 % und 30 % liegt.

**9.** Verwendung der Poly(imid-amid)-Lösungen nach Anspruch 1 zur Herstellung von Überzugsfilmen, Isolierlacken und Klebstoffen, entweder bei der Verdampfung des Lösungsmittels oder später.